# EUROPÄISCHE PATENTANMELDUNG

(11) **EP 3 278 666 A1**
(43) Veröffentlichungstag der Anmeldung: **07.02.2018**
(21) Anmeldenummer: 16182780.3
(22) Anmeldetag: 04.08.2016
(51) Int. Cl.: A01N 43/80, A01N 25/28, A01P 13/00

(54) **WÄSSRIGE KAPSELSUSPENSIONSKONZENTRATE AUF BASIS VON 2-(2,4-DICHLORBENZYL)-4,4-DIMETHYL-1,2-OXAZOLIDIN-3-ON**

(71) Anmelder: Bayer CropScience Aktiengesellschaft, 40789 Monheim am Rhein (DE)
(72) Erfinder: Die Erfindernennung liegt noch nicht vor
(74) Vertreter: BIP Patents

(57) **Zusammenfassung**

Die vorliegende Erfindung betrifft wässrige Kapselsuspensionskonzentrate auf Basis von 2-[(2,4-Dichlorphenyl)-methyl]-4,4'-dimethyl-3-isoxazolidinone, deren Herstellung sowie deren Mischungen mit Suspensionskonzentraten und deren Verwendung als agrochemische Formulierung.

## Beschreibung

Die vorliegende Erfindung betrifft wässrige Kapselsuspensionskonzentrate auf Basis von 2-[(2,4-Dichlorphenyl)-methyl]-4,4'-dimethyl-3-isoxazolidinone, deren Herstellung sowie deren Mischungen mit Suspensionskonzentraten und deren Verwendung als agrochemische Formulierung.

Der Wirkstoff 2-[(2,4-Dichlorphenyl)-methyl]-4,4'-dimethyl-3-isoxazolidinone (CAS Nummer 81777-95-9 bzw. IPUAC 2-(2,4-dichlorobenzyl)-4,4-dimethyl-1,2-oxazolidin-3-one, im Folgenden abgekürzt DCPMI), ist ein chemischer Verwandter des Clomazone (im Folgenden abgekürzt CPMI, CAS 81777-89-1, IUPAC 2-(2-chlorobenzyl)-4,4-dimethyl-1,2-oxazolidin-3-one). Im Vergleich zu Clomazone hat DCPMI eine deutlich geringere Wasserlöslichkeit (39,5 ppm statt 1000 ppm) und einen etwas geringeren Dampfdruck (0,88 mPa statt 19,2 mPa), so dass die berechnete Henry Konstante (Verteilung des Wirkstoffes über die Wassergasphase) auf ähnlichem Niveau ist. Beide Wirkstoffe gehören zur Klasse der flüchtigen Wirkstoffe, die unerwünschte Schäden an Nachbarkulturen verursachen können. Verbunden mit dem geringen Dampfdruck kann es auch zu einer unerwünschten breiten Verteilung kommen, was aus human- und ökotoxikologischen sowie ökonomischen Gründen verhindert werden sollte.

DCPMI wird in herbiziden Zusammensetzungen und Mischungen eingesetzt oder als selektives Grasherbizid verwendet, wie beispielsweise in der WO-A 2015/127259 oder WO-A 2012/148689 beschrieben.

Aus der EP-A 0 039 441 sind bereits Mikrokapsel-Suspensionen zur Anwendung in der Landwirtschaft bekannt. Die dort offenbarten Mikrokapseln werden aus Gelatine und Carbonylverbindungen hergestellt. Die Herstellung von Polyurethan/-harnstoffkapseln (im Folgenden als Polyurethan Kapseln) bezeichnet ist nicht offenbart.

In der WO-A 96/14743 wird Clomazone mit Polyurethan verkapselt. Die Flüchtigkeit wird hierbei bis zu 50% reduziert, allerdings ist das Verhältnis von Clomazone zu Isocyanat 1:1 bis 6:1, so dass die Wandstärke der Polyurethan-Kapsel sehr hoch ist. Zusätzlich wird die Verkapselung unter Zugabe von polyfunktionellen Aminen durchgeführt, wobei ein Verhältnis von Amin zu Isocyanat 0,1:1 bis 1:1 gewählt wurde.

In der WO-A 2015/143974 wird ebenfalls die Verkapselung von CPMI offenbart, allerdings mit einer Harnstoff-Formaldehyd Kapsel.

WO-A 2015/143979 und WO-A 2015/143975 beschreiben alternative, spezielle Lösemittel für CPMI. In der WO-A 2014/166347 wird die Verkapselung von CPMI mit Polyacetylencarbamiden offenbart.

Nachteilig an dem im Stand der Technik beschriebenen Verfahren ist, dass die starke Verkapselung zu einer langanhaltenden Freisetzung des Wirkstoffes führt, was im Falle von DCPMI nicht erwünscht ist. Da Clomazone im Vorauflauf von Rapskulturen eingesetzt wird, ist eine Freisetzung über einen längeren Zeitraum von Vorteil. DCPMI hingegen wird sowohl im Vor- als auch Nachauflauf von Getreidekulturen eingesetzt. Im Vor- und Nachauflauf werden dabei unterschiedliche Gräser (z.B. Ackerfuchsschwanz, ALOMY) bekämpft. Dazu wird bevorzugt eine Kombination des verkapselten Wirkstoffes mit unverkapselten herbiziden Wirkstoffen verwendet. Bei dieser Art der Anwendung ist eine schnelle Wirkung erwünscht. Bei einer zu spät einsetzenden Wirkung, können die Unkräuter und Gräser schon zu weit im Wachstum fortgeschritten sein, so dass eine erfolgreiche Bekämpfung nicht mehr möglich ist.

Des Weiteren ist Clomazone ein bei RT flüssiger Wirkstoff, der eine Zugabe von organischen Lösungsmitteln nicht notwendig macht. Im Gegensatz dazu, muss DCPMI in einem geeigneten Lösungsmittel vorgelöst werden. Nachteilig an den im Stand der Technik beschriebenen Verfahren ist, dass keine der dort offenbarten Verkapselungen sich für die o.g. spezielle Anwendung des DCPMI eignet.

Aufgabe der vorliegenden Erfindung bestand daher in der Bereitstellung einer geeigneten Verkapselung von DCPMI, die die Flüchtigkeit um mindestens 70% (relativ) und gleichzeitig die Wirkstoffpenetration um maximal 10% reduziert. Des Weiteren sollte ein geeignetes Lösemittel für DCPMI gefunden werden. Schließlich war es ebenfalls Aufgabe der vorliegenden Erfindung agrochemische Formulierungen bereitzustellen, bevorzugt Kapselsuspensionskonzentrate, die das erfindungsgemäß verkapselte DCPMI sowie weitere herbizide Wirkstoffe enthalten, sowie deren Verwendung zur Bekämpfung von Unkräutern im Getreide und Raps, im Vorauflauf und Nachauflauf, bevorzugt im Vorauflauf von Wintergetreide zur Bekämpfung von Gräsern und hierbei insbesondere von Acker-Fuchsschwanzgras (ALOMY). Die Kapselsuspensionskonzentrate sollten sich des Weiteren mit Suspensionskonzentraten, die weitere agrochemische Wirkstoffe enthalten, mischen lassen.

Die Aufgabe wurde mit den erfindungsgemäßen Kapselsuspensionskonzentraten (CS) gelöst.

Gegenstand der vorliegenden Erfindung sind daher Kapselsuspensionskonzentrate enthaltend
A) eine teilchenförmige disperse Phase, enthaltend
   a) ein Reaktionsprodukt aus mindestens einer Verbindung mit gegenüber isocyanatreaktiven Gruppen a1) und einem Isocyanat-Gemisch a2),
   b) 2-[(2,4-dichlorphenyl)-methyl-4,4'-dimethyl]-3-isoxazolidinone, gelöst in einem organischen, wasserunlöslichem Lösemittel b1),
   c) ein oder mehrere Zusatzstoffe und
B) eine flüssige, wässrige Phase,
wobei die Teilchen der dispersen Phase A) eine mittlere Partikelgröße zwischen 1 und 50 µm aufweisen.

Bevorzugt enthalten die erfindungsgemäßen CS mindestens ein Schutzkolloid c1).

Die Partikelgröße wird nach CIPAC (CIPAC = Collaborative International Pesticides Analytical Council; www.cipac.org) Methode MT 187 bestimmt als d50 bzw. D90 = Wirkstoff-Partikelgröße (Laserstreuung 50 bzw. 90% aller Volumenpartikel). Die mittlere Partikelgröße bezeichnet den d50 Wert.

Die Teilchen der dispersen Phase A) weisen eine mittlere Partikelgröße d50 auf, die im allgemeinen zwischen 1 und 50 µm, bevorzugt 1 bis 20 µm, ganz besonders bevorzugt zwischen 3 und 15 µm liegt.

Ebenfalls Gegenstand der vorliegenden Erfindung ist ein Verfahren zur Herstellung der erfindungsgemäßen Kapselsuspensionskonzentraten, dadurch gekennzeichnet, dass in Schritt (1) 2-[(2,4-dichlorphenyl)-methyl]-4,4'-dimethyl-3-isoxazolidinone b), gelöst in einem organischen, wasserunlöslichem Lösemittel b1), mit dem Isocyanat-Gemisch a2) sowie gegebenenfalls mit einem organischen Lösungsmittel und/oder Emulgator vermischt wird, die so hergestellte Lösung dann in einem (2) zweiten Schritt in Wasser, enthaltend ein Schutzkolloid c1), gegebenenfalls im Gemisch mit weiteren Zusatzstoffen c), emulgiert wird und die so hergestellte Emulsion in einem (3) dritten Schritt mit a1) versetzt wird und danach gegebenenfalls noch Zusatzstoffe c) hinzugefügt werden.

Im Folgenden beziehen sich die Mengenangaben, sofern nicht anders beschrieben, auf Gesamtmenge aus A) und B).

In einer weiteren Ausführungsform des erfindungsgemäßen Verfahrens kann die aus dem zweiten Schritt (2) erhaltene Emulsion im dritten Schritt (3) des erfindungsgemäßen Verfahrens unter Rühren zunächst mit mindestens einem Diamin, Polyamin, Dialkohol, Polyalkohol und/oder Aminoalkohol a1) versetzt werden. Dabei werden die Amin bzw. Alkohol Komponenten a1) zweckmäßigerweise in wässriger Lösung zugefügt. Nach Beendigung der zur Kapselbildung führenden Reaktion wird gegebenenfalls noch mit Zusatzstoffen c) versetzt. Bevorzugt wird jedoch im erfindungsgemäßen Verfahren ausschließlich Wasser als Komponente a1) verwendet.

Zur Herstellung der erfindungsgemäßen CS können alle für derartige Zwecke üblichen Apparate eingesetzt werden, die starke Scherkräfte erzeugen. Beispielhaft genannt seien Rotor-Stator-Mischer und Strahldispergatoren.

Bei der Durchführung des erfindungsgemäßen Verfahrens kann das Verhältnis von NCO-Gruppen aus der Komponente a2) zu NCO-reaktiven Gruppen aus der Komponente a1) in einem bestimmten Bereich variiert werden. Im Allgemeinen wird auf 1 mol an Isocyanat 0,8 bis 1,5 Äquivalente an Amin- bzw. Alkohol-Komponente eingesetzt. Bevorzugt wird die Mengen an Isocyanat und Amin bzw. Alkohol so gewählt, dass äquimolare Mengen an Isocyanat-Gruppen und an Amino- bzw. Hydroxy-Gruppen vorhanden sind.

Die Reaktionstemperaturen können bei der Durchführung des erfindungsgemäßen Verfahrens innerhalb eines bestimmten Bereiches variiert werden.

Die erste Stufe (1) des erfindungsgemäßen Verfahrens wird im Allgemeinen bei Temperaturen zwischen - 10 und 80°C, bevorzugt zwischen 0°C und 50°C, besonders bevorzugt zwischen 2°C und 40 °C, ganz besonders bevorzugt zwischen 2°C und 30°C durchgeführt, die zweite Stufe (2) im Allgemeinen bei Temperaturen zwischen -10°C und +80°C, bevorzugt zwischen 0°C und 80°C und in der dritten Stufe (3) im allgemeinen bei Temperaturen zwischen 0°C und 80°C, bevorzugt zwischen 10°C und 75°C durchgeführt.

Das erfindungsgemäße Verfahren wird unter Atmosphärendruck durchgeführt.

Die Wandstärke der Kapseln der erfindungsgemäßen Kapselsuspensionskonzentrate liegt zwischen 0,001 und 4 µm, bevorzugt zwischen 0,01 und 2 µm und ganz besonders bevorzugt zwischen 0,01 und 1 µm.

Bei der Umsetzung von a1) mit a2) ist die Summe der zahlenmittleren Funktionalität X an Isocyanat-Gruppen und gegenüber isocyanatreaktiven Gruppen 2 ≤ X ≤ 6, bevorzugt 2 ≤ X ≤ 4,5, besonders bevorzugt 2,0 ≤ X ≤ 3,5 und ganz besonders bevorzugt 2,2 ≤ X ≤ 2,8.

Die "zahlenmittlere Funktionalität X" als Merkmal im erfindungsgemäßen Verfahren wird wie folgt veranschaulicht. Die höhere funktionale Verbindung ist hierbei entscheidend, wobei die Differenz der niedriger funktionalen Verbindung minus 2 zur höher funktionalen Verbindung addiert wird. Hat beispielsweise a1) eine (durchschnittliche) Funktionalität von 2,1 und a2) von 2,6 so gilt: 2,1-2=0,1. Diese Differenz wird 2,6 zugerechnet: 2,6 + 0,1 = 2,7. So ist die zahlenmittlere Funktionalität 2,7. Alternativ gilt, wenn a1) 2,7 und a2) 2,3 ist, so ergibt sich die zahlenmittlere Funktionalität von 2,7 + 2,3-2 = 3,0.

Die erfindungsgemäßen Kapselsuspensionskonzentrate zeichnen sich durch eine Reihe von Vorteilen aus. So sind sie in der Lage, die aktiven Komponenten über einen längeren Zeitraum in der jeweils erforderlichen Menge freizusetzen. Günstig ist auch, dass die Pflanzenverträglichkeit der enthaltenen Wirkstoffe verbessert wird und die Flüchtigkeit und somit Schäden an Nachbarkulturen reduziert werden. Außerdem ist auch die akute Toxizität der aktiven Komponenten vermindert, so dass die Ausbringung der Mikrokapsel-Formulierungen für das Bedienungspersonal auch ohne große Sicherheitsvorkehrungen unproblematisch ist.

Als Verbindungen mit gegenüber isocyanatreaktiven Gruppe a1) kommen aliphatische, aromatische, cyclische und alicyclische primäre und sekundäre Diamine sowie Polyamine in Betracht. Als Beispiele genannt seien Ethylendiamin (1,2), Diethylentriamin, Monoisopropylamin, 4-Aminopyridin (4-AP), n-Propylamin, Ethylen- oder Propylenimin-basiertes Polyaziridin, Triethylenetetraamin (TETA), Tetraethylenpentamin, 2,4,4'-Triaminodiphenylether, Bis(hexamethylen)-triamin, Ethylendiamin (EDA), Trimethylendipiperidin (TMDP), Guanidincarbonat (GUCA), Phenylendiamin, Toluendiamin, Pentamethylenhexamin, 2,4-Diamino-6-methyl-1,3,5-triazine, 1,2-Diaminocyclohexan, 4,4'-Diaminodiphenylmethan, 1,5-Diaminonaphthalenisophorondiamin, Diaminopropan, Diaminobutan, Piperazin, Aminoethylenepiperazin (AEP), Poly(propyleneglycol)-bis(2-aminopropylether) oder o,o'-Bis(2-aminopropyl)polypropylenglycol-blockpolyethylenglycol-blockpolypropylenglycol, Hexamethlyendiamin, Bis-(3-aminopropyl)amin, Bis-(2-methylaminoethyl)methylamin, 1,4-Diaminocyclohexan, 3-Amino-1-methyl-aminopropan, N-Methyl-bis-(3-aminopropyl)amin, 1,4-Diamino-n-butan und 1,6 Diamino-n-hexan. Bevorzugt sind Hexamethlyendiamin sowie Diethylentriamin.

Als Verbindungen mit gegenüber isocyanatreaktiven Gruppe a1) kommen ebenfalls primäre und sekundäre, aliphatische sowie aromatische Dialkohole und Polyalkohole in Frage. Als Beispiele seien genannt: Ethandiol, Propandiol (1,2), Propandiol (1,3), Butandiol (1,4), Pentandiol (1,5), Hexandiol (1,6), Glycerin und Diethylenglykol. Bevorzugt werden Glycerin und 1,2-Propandiol verwendet.

Als Verbindungen mit gegenüber isocyanatreaktiven Gruppe a1) kommen auch Aminoalkohle in Betracht. Als Beispiel seien Triethanolamin, Monoethanolamin, Triisopropanolamin, Diisopropylamin, N-Methylethanolamin, N-Methyl-diethanolamin genannt.

In einer ganz besonders bevorzugten Ausführungsform wird Wasser als isocyanatreaktive Komponente a1) verwendet. Dieses wird in-situ mit dem Isocyanat (Poly/Di) zu einem Amin (Poly/Di) umgesetzt. Ebenso können Abmischungen von a1) eingesetzt werden. Bevorzugt ist ausschließlich Wasser.

Bei dem Isocyanat-Gemisch a2) handelt es sich um ein Mono, Di- und/oder Polyisocyanat-Gemisch bzw. um ein Reaktionsprodukt von Isocyanat-Gemischen. Geeignete Verbindung a2) sind beispielsweise 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane (H12-MDI) oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI), 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Modifizierungen wie etwa Allophanat-, Uretdion-, Urethan-, Isocyanurat-, Biuret-, Iminooxadiazindion- oder Oxadiazintrionstruktur enthaltende Verbindungen basierend auf den genannten Diisocyanaten geeignete Bausteine der Komponente a2) sowie mehrkernige Verbindungen wie beispielsweise polymeres MDI (pMDI wie etwa PAPI-27 von Dow oder Desmodur^{®} 44V20 Typen von Covestro AG) sowie Kombinationen von den genannten.

Bevorzugt werden Modifizierungen mit einer Isocyanat(NCO)-Funktionalität von 2 bis 6, bevorzugt von 2,0 bis 4,5 und besonders bevorzugt von 2,3 bis 4,2 und ganz besonders bevorzugt von 2,3 bis 3,8 eingesetzt. Insbesondere bevorzugt ist eine NCO-Funktionalität von 2,4 bis 2,8.
Bevorzugt werden zur Modifizierung Diisocyanate aus der Reihe HDI, IPDI, H12-MDI, TDI und MDI verwendet. Besonders bevorzugt sind TDI und MDI sowie deren Derivate. Insbesondere bevorzugt wird als MDI polymeres MDI wie PAPI-27 eingesetzt in Abmischung mit TDI. Der bevorzugte NCO-Gehalt der Isocyanat bzw. Polyisocyanat bzw. Abmischung liegt zwischen 3 und 50 Gew.-%, besonders bevorzugt zwischen 10 und 40 Gew.-%, besonders bevorzugt zwischen 15 % und 35 Gew.-% und ganz besonders bevorzugt zwischen 18 und 30 Gew.-%. Es können die Isocyanatgruppen auch partiell oder ganz bis zu ihrer Reaktion mit der isocyanatreaktiven Gruppen blockiert vorliegen, so dass sie nicht unmittelbar mit der Isocyanat-reaktiven Gruppe reagieren können. Dies gewährleistet, dass die Reaktion erst bei einer bestimmten Temperatur (Blockierungstemperatur) stattfindet. Typische Blockierungsmittel finden sich im Stand der Technik und sind so ausgewählt, dass sie bei Temperaturen zwischen 60 und 220 °C, je nach Substanz, von der Isocyanat-Gruppe wieder abspalten und erst dann mit der Isocyanatreaktiven Gruppe reagieren. Es gibt Blockierungsmittel, die in das Polyurethan eingebaut werden und auch solche, die als Lösemittel bzw. Weichmacher im Polyurethan bleiben oder aus dem Polyurethan ausgasen. Man spricht auch von blockierten NCO-Werten. Ist in der Erfindung von NCO-Werten die Rede, so ist dies immer auf den unblockierten NCO-Wert bezogen. Meist wird bis zu < 0,5% blockiert. Typische Blockierungsmittel sind beispielsweise Caprolactam, Methylethylketoxim, Pyrazole wie beispielsweise 3,5-Dimethyl-1,2-pyrazol oder 1,-Pyrazol, Triazole wie beispielsweise 1,2,4-Triazol, Diisopropylamin, Diethylmalonat, Diethylamin, Phenol oder dessen Derivate oder Imidazol.

Die Komponente a2) kann auch als Mischung von obigen Verbindungen oder auch als Prepolymer verwendet werden. Hierbei erfolgt die Umsetzung beispielsweise einer Isocyanat-Gruppen enthaltende Verbindung mit einem NCO-Gehalt zwischen 3 und 50 Gew.-%, mit gegenüber isocyanatreaktive Gruppen enthaltende Verbindungen mit einer OH-Zahl zwischen 10 mg KOH/g und 150 mg KOH/g.

Ganz besonders bevorzugt wird eine Mischung aus polymeren(p)MDI sowie TDI verwendet. Dabei kann das Verhältnis von dem pMDI zu Toluylendiisocyanat in einem bestimmten Verhältnis variiert werden, bevorzugt werden 0,2 bis 2 Gew.-% pMDI und 0,2 bis 2 Gew.-% TDI eingesetzt.

Die wässrige Phase B) der erfindungsgemäßen Kapselsuspensionskonzentrate kann neben Wasser noch weitere Zusatzstoffe c) wie Emulgatoren, Schutzkolloide, Konservierungsmittel, Entschäumer, Kältestabilisatoren, Verdicker, pH-Stabilisatoren und Neutralisationsmittel enthalten. Bevorzugt als Komponente c) sind Emulgatoren, Verdicker und Schutzkolloide c1).

Als organische Solventien b1) kommen dabei alle üblichen organischen Lösungsmittel in Betracht, die einerseits mit Wasser wenig mischbar sind, andererseits aber die eingesetzten agrochemischen Wirkstoffe gut lösen. Bevorzugt genannt seien aliphatische und aromatische, gegebenenfalls halogenierte Kohlenwasserstoffe, wie Toluol, Xylol, Solvesso^{®} 100, 100ND, 150, 150 ND oder 200, 200 ND (Mineralöl), Tetrachlormethan, Chloroform, Methylenchlorid und Dichlorethan, außerdem Ester, wie Ethylacetat, und Alkancarbonsäureamide, wie Octancarbonsäuredimethylamid und Decancarbonsäuredimethylamid. Des Weiteren kommen Pflanzenöle sowie modifizierte Öl (bspw. durch Methylierung, Ethylierung und auch Hydrierung und Hydratisierung) auf Basis beispielsweise von Rapskeimöl, Maiskeimöl, Kokosöl oder ähnlichen. Besonders bevorzugt wird Mineralöl verwendet, ganz besonders bevorzugt Lösungsmittel auf Basis einer von Dialkylnaphthalin (wie beispielsweise Diisopropylnaphthalin), sowie Mischung aus 1-Methyl-, 2-Methylnaphatalen und Naphthalen (beispielsweise Solvesso^{®} 200 ND Typen, CAS Nr.: 64742-94-5).

Als Emulgatoren c) kommen übliche, in Formulierungen von agrochemischen Wirkstoffen vorhandene oberflächenaktive Substanzen in Frage. Beispielhaft genannt seien ethoxylierte Nonylphenole, Polyethylenglykolether von linearen Alkoholen, Umsetzungsprodukte von Alkylphenolen mit Ethylenoxid und/oder Propylenoxid, weiterhin Fettsäureester, Alkylsulfonate, Alkylsulfate und Arylsulfate.

Als Schutzkolloide c1) (Dispergiermittel) kommen alle üblicherweise für diesen Zweck eingesetzten Substanzen in Betracht. Bevorzugt genannt seien natürliche und synthetische wasserlösliche Polymere, wie Gelatine, Stärke und Cellulose-Derivate, insbesondere Celluloseester und Celluloseether, wie Methylcellulose, ferner Polyvinylalkohole, teilhydrolysierte Polyvinylacetate, Ligninsulfonate (wie Borresperse^{®}NA, REAX^{®} 88 oder Kraftsperse^{®} 25 S), modifizierte Naphthalinsulfonate (wie etwa Morwet D-425), Polyvinylpyrrolidone und Polyacrylamide. Besonders bevorzugt werden Polyvinylalkohole, teilhydrolysierte Polyvinylacetate sowie Ligninsulfonate verwendet. Ganz besonders bevorzugt Polyvinylalkohole.

Als Verdicker c) kommen organische Verdicker sowie anorganische Verdicker in Frage. Organische Verdicker kommen als organisch natürliche bzw. biotechnologisch modifizierte oder organisch synthetische Verdicker in Frage. Typische synthetische Verdicker sind Rheostrux^{®} (Croda), Thixin®- oder Thixatrol^{®}-Reihe (Elementis). Diese sind typischerweise auf Basis von Acrylaten. Typische organische Verdicker sind auf Basis von Xanthan oder Cellulose (wie etwa Hydroxyethyl oder Carboxymethylcellulose) oder einer Kombination davon. Weitere typische Vertreter sind auf Basis von Cellulose oder Lignin. Bevorzugt werden natürliche modifzierte Verdicker auf Basis von Xanthan verwendet. Typische Vertreter sind beispielsweise Rhodopol^{®} (Solvay) und Kelzan^{®} (Kelco Corp.) sowie Satiaxane^{®} (Cargill). Bevorzugt sind ebenfalls Kieselsäuren und Attapulgite.

Als Konservierungsmittel c) kommen alle üblicherweise für diesen Zweck in Pflanzenbehandlungsmitteln vorhandenen Substanzen in Betracht. Als Beispiele seien Acticide^{®} SPX (Thor) sowie Proxel^{®} GXL (Lonza) genannt.

Als Entschäumer c) kommen alle üblicherweise für diesen Zweck in Pflanzenbehandlungsmitteln einsetzbaren Stoffe in Frage. Bevorzugt sind Silan Derivate, wie Polydimethylsiloxane, und Magnesiumstearat. Typische Produkte sind Silcolapse^{®} 484 (Solvay, Silioxane Emulsion) sowie SAG 1571 (Momentive) verwendet.

Als Kältestabilisatoren c) können alle üblicherweise für diesen Zweck in Pflanzenbehandlungsmitteln einsetzbaren Stoffe fungieren. Beispielhaft genannt seien Harnstoff, Glycerin und Propylenglykol.

Als Neutralisationsmittel c) kommen übliche Säuren und Basen in Betracht. Beispielhaft genannt seien Phosphorsäure, Zitronensäure, Natronlauge und wässrige Ammoniak-Lösung.

Die Zusammensetzung der erfindungsgemäßen Kapselsuspensionskonzentrate kann innerhalb eines bestimmten Bereiches variiert werden. Der Anteil der dispersen Phase A) in Bezug auf die gesamte Formulierung liegt im Allgemeinen zwischen 10 und 90 Gew. %, bevorzugt zwischen 30 und 70 Gew. %, besonders bevorzugt zwischen 40 und 60 Gew.-%.

Der Anteil von a) liegt im Allgemeinen zwischen 0,1 und 8 Gew. %, bevorzugt zwischen 0,2 und 4,5 Gew. %, besonders bevorzugt zwischen 0,3 und 2,5 Gew.-%, der Anteil an agrochemischem Wirkstoff b) liegt im Allgemeinen zwischen 1 und 50 Gew. %, bevorzugt zwischen 5 und 40 Gew. % besonders bevorzugt zwischen 10 und 20 Gew.-%, der Anteil an organischem Lösemittel b1) liegt im Allgemeinen zwischen 1 und 90 Gew. %, bevorzugt zwischen 10 und 60 Gew. %, besonders bevorzugt zwischen 20 und 40 Gew.-%, der Anteil an Schutzkolloide c1) liegt im Allgemeinen zwischen 0,1 und 5 Gew.-%, bevorzugt zwischen 0,2 und 3 Gew.-%, besonders bevorzugt zwischen 0,3 und 1,5 Gew.-%und der Anteil an Zusatzstoffen c) liegt im Allgemeinen zwischen 0,1 und 15 Gew. %, bevorzugt zwischen 0,3 und 10 Gew. % und besonders bevorzugt zwischen 0,4 und 3 Gew.-%.

Bevorzugt liegt das Verhältnis von agrochemischem Wirkstoff b) zur Isocyanatmischung a2) zwischen 7:1 und 40:1, bevorzugt zwischen 8:1 und 20:1, besonders bevorzugt zwischen 9:1 und 18:1.

Werden als Komponente a1) aminofunktionelle Verbindungen eingesetzt, liegt das Verhältnis von aminischen isocyanatreaktiven Gruppen a1) zur Isocyanatmischung a2) zwischen 0 und 1, bevorzugt zwischen 0 und 0,5 besonders bevorzugt zwischen 0 und 0,3. Ganz besonders bevorzugt ist 0, d.h. es werden keine aminofunktionelle Verbindungen a1) eingesetzt.

In einer bevorzugten Ausführungsform werden die erfindungsgemäßen Kapselsuspensionskonzentrate (CS) mit einem oder mehreren Suspensionskonzentrat(en) (SC) zu einer ZC Formulierung abgemischt.

Ebenfalls Gegenstand der vorliegenden Erfindung sind ZC-Formulierungen enthaltend die erfindungsgemäßen CS-Formulierungen und mindestens ein Suspensionskonzentrat (SC's) enthaltend
- ein oder mehrere herbizide Wirkstoffe a') und/oder ein oder mehrere Safener s),
- mindestens ein oder mehrere Verdicker c),
- ein oder mehrere anionische Emulgatoren e1) und
- ein oder mehrere nichtionische Emulgatoren e2).

Bevorzugt enthalten die erfindungsgemäßen ZC-Formulierungen
ein oder mehrere Safener s),
   - mindestens ein oder mehrere Verdicker c),
   - mindestens ein oder mehrere anionische Emulgatoren e1),
   - mindestes ein oder mehrere nichtionische Emulgatoren e2) und
   - mindestens ein oder mehrere Trägermaterialien f).

Ebenfalls bevorzugt enthalten die erfindungsgemäßen ZC-Formulierungen
ein oder mehrere herbizide Wirkstoffe a') und ein oder mehrere Safener s),
   - mindestens ein oder mehrere Verdicker c),
   - mindestens ein oder mehrere anionische Emulgatoren e1),
   - mindestes ein oder mehrere nichtionische Emulgatoren e2) und
   - mindestens ein oder mehrere Trägermaterialien f).

Bevorzugte herbizide Wirkstoffe a') sind Aclonifen, Aminopyralid, Benzofenap, Bifenox, Bromoxynil, Bromoxynil-butyrate, Kaliumheptanoat und -octanoat, Butachlor, Clomazone, Clopyralid, 2,4-D umfassend auch die häufig eingesetzten Formen: 2,4-D-butotyl, 2,4-D-butyl, 2,4-D-dimethylammonium, 2,4-D-diolamine (2,4-D-diethanolammonium), 2,4-D-ethyl, 2,4-D-2-ethylhexyl, 2,4-D-isobutyl, 2,4-D-iso-octyl, 2,4-D-isopropyl, 2,4-D-isopropylammonium, 2,4-D-sodium, 2,4-D-triisopropanolammonium, 2,4-D-trolamin (2,4-D-triethanolammonium, Diflufenican, Dimethachlor, Dimethenamid, Dimethenamid-P, Ethoxysulfuron, Fenoxaprop, Fenoxaprop-P, Penoxaprop-ethyl, Fenoxaprop-P-ethyl, Fenquinotrione, Fentrazamide, Florasulam, Flufenacet, Fluroxypyr, Fluroxypyr-meptyl, Foramsulfuron, Halauxifen-methyl, Iodosulfuron Iodosulfuron-methyl-natrium, Isoxaflutole, MCPA (4-Chloro-2-methylphenoxy)acetic acid, umfassend auch die häufig eingesetzten Formen: MCPA-butotyl, MCPAdimethylammonium, MCPA-isoctyl, MCPA-natrium, MCPA-kalium, MCPA-2-ethylhexyl, Mefenacet, Mesosulfuron, Mesosulfuron-methyl, Metazachlor, Metolachlor, S-Metolachlor, Metosulam, Metribuzin, Napropamid, Nicosulfuron, Oxadiargyl, Oxadiazon, Pendimethalin, Pethoxamid, Picloram, Propoxycarbazone, Propoxycarbazone-natrium, Propyzamid, Prosulfocarb, Pyrasulfotole, Pyroxasulfone, Pyroxsulam, Quinmerac, Tefuryltrione, Tembotrione, Thiencarbazone, Thiencarbazone-methyl, Triafamone.

Als Komponente s) können auch die folgenden Gruppen von Verbindungen (Safener) eingesetzt werden:
s1) Verbindungen aus der Gruppe heterocyclischer Carbonsäurederivate:
   s1^{a}) Verbindungen vom Typ der Dichlorphenylpyrazolin-3-carbonsäure (S1^{a}), vorzugsweise Verbindungen wie
      1-(2,4-Dichlorphenyl)-5-(ethoxycarbonyl)-5-methyl-2-pyrazolin-3-carbonsäure,
      1-(2,4-Dichlorphenyl)-5-(ethoxycarbonyl)-5-methyl-2-pyrazolin-3-carbonsäureethylester (S1-1) ("Mefenpyr-diethyl"), und verwandte Verbindungen, wie sie in der WO-A-91/07874 beschrieben sind;
   s1^{b}) Derivate der Dichlorphenylpyrazolcarbonsäure (S1^{b}), vorzugsweise Verbindungen wie
      1-(2,4-Dichlorphenyl)-5-methylpyrazol-3-carbonsäureethylester (S1-2),
      1-(2,4-Dichlorphenyl)-5-isopropylpyrazol-3-carbonsäureethylester (S1-3),
      1-(2,4-Dichlorphenyl)-5-(1,1-dimethyl-ethyl)pyrazol-3-carbonsäureethylester (S1-4) und verwandte Verbindungen, wie sie in EP-A-333 131 und EP-A-269 806 beschrieben sind;
   s1^{c}) Derivate der 1,5-Diphenylpyrazol-3-carbonsäure (S1^{c}), vorzugsweise Verbindungen wie
      1-(2,4-Dichlorphenyl)-5-phenylpyrazol-3-carbonsäureethylester (S1-5),
      1-(2-Chlorphenyl)-5-phenylpyrazol-3-carbonsäuremethylester (S1-6) und verwandte Verbindungen wie sie beispielsweise in der EP-A-268554 beschrieben sind;
   s1^{d}) Verbindungen vom Typ der Triazolcarbonsäuren (S1^{d}), vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-7), und verwandte Verbindungen, wie sie in EP-A-174 562 und EP-A-346 620 beschrieben sind;
   s1^{e}) Verbindungen vom Typ der 5-Benzyl- oder 5-Phenyl-2-isoxazolin-3- carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-3-carbonsäureethylester (S1-11) ("Isoxadifen-ethyl") oder -n-propylester (S1-12) oder 5-(4-Fluorphenyl)-5-phenyl-2-isoxazolin-3-carbonsäureethylester (S1-13), wie sie in der Patentanmeldung WO-A-95/07897 beschrieben sind.
s2) Verbindungen aus der Gruppe der 8-Chinolinoxyderivate (S2):
   s2^{a}) Verbindungen vom Typ der 8-Chinolinoxyessigsäure (S2^{a}), vorzugsweise
      (5-Chlor-8-chinolinoxy)essigsäure-(1-methylhexyl)-ester ("Cloquintocet-mexyl") (S2-1),
      (5-Chlor-8-chinolinoxy)essigsäure-(1,3-dimethyl-but-1-yl)-ester (S2-2),
      (5-Chlor-8-chinolinoxy)essigsäure-4-allyl-oxy-butylester (S2-3),
      (5-Chlor-8-chinolinoxy)essigsäure-1-allyloxy-prop-2-ylester (S2-4),
      (5-Chlor-8-chinolinoxy)essigsäureethylester (S2-5),
      (5-Chlor-8-chinolinoxy)essigsäuremethylester (S2-6),
      (5-Chlor-8-chinolinoxy)essigsäureallylester (S2-7),
      (5-Chlor-8-chinolinoxy)essigsäure-2-(2-propyliden-iminoxy)-1-ethylester (S2-8),
      (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
   s2^{b}) Verbindungen vom Typ der (5-Chlor-8-chinolinoxy)malonsäure (S2^{b}), vorzugsweise Verbindungen wie (5-Chlor-8-chinolinoxy)malonsäurediethylester,
      (5-Chlor-8-chinolinoxy)malonsäurediallylester,
      (5-Chlor-8-chinolinoxy)malonsäure-methyl-ethylester und verwandte Verbindungen, wie sie in EP-A-0 582 198 beschrieben sind.
s3) Wirkstoffe vom Typ der Dichloracetamide (S3), die häufig als Vorauflaufsafener (bodenwirksame Safener) angewendet werden, wie z. B.
   "Dichlormid" (N,N-Diallyl-2,2-dichloracetamid) (S3-1),
   "R-29148" (3-Dichloracetyl-2,2,5-trimethyl-1,3-oxazolidin) der Firma Stauffer (S3-2),
   "R-28725" (3-Dichloracetyl-2,2,-dimethyl-1,3-oxazolidin) der Firma Stauffer (S3-3),
   "Benoxacor" (4-Dichloracetyl-3,4-dihydro-3-methyl-2H-1,4-benzoxazin) (S3-4),
   "PPG-1292" (N-Allyl-N-[(1,3-dioxolan-2-yl)-methyl]-dichloracetamid) der Firma PPG Industries (S3-5),
   "DKA-24" (N-Allyl-N-[(allylaminocarbonyl)methyl]-dichloracetamid) der Firma Sagro-Chem (S3-6),
   "AD-67" oder "MON 4660" (3-Dichloracetyl-1-oxa-3-aza-spiro[4,5]decan) der Firma Nitrokemia bzw. Monsanto (S3-7),
   "TI-35" (1-Dichloracetyl-azepan) der Firma TRI-Chemical RT (S3-8),
   "Diclonon" (Dicyclonon) oder "BAS145138" oder "LAB145138" (S3-9)
   ((RS)-1-Dichloracetyl-3,3,8a-trimethylperhydropyrrolo[1,2-a]pyrimidin-6-on) der Firma BASF, "Furilazol" oder "MON 13900" ((RS)-3-Dichloracetyl-5-(2-furyl)-2,2-dimethyloxazolidin) (S3-10), sowie dessen (R)-Isomer (S3-11).
s4) Verbindungen aus der Klasse der Acylsulfonamide (S4):
   s4^{a}) N-Acylsulfonamide der Formel (S4^{a}) und deren Salze wie sie in der WO-A-97/45016 beschrieben sind, 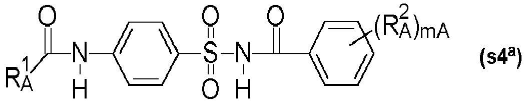 worin
      R_{A}¹ (C₁-C₆)Alkyl, (C₃-C₆)Cycloalkyl, wobei die 2 letztgenannten Reste durch v_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
      R_{A}² Halogen, (C₁-C₄)Alkyl, (C₁-C₄)Alkoxy, CF_{3;}
      m_{A} 1 oder 2;
      v_{A} ist 0, 1, 2 oder 3 bedeuten;
   s4^{b}) Verbindungen vom Typ der 4-(Benzoylsulfamoyl)benzamide der Formel (S4^{b}) und deren Salze, wie sie in der WO-A-99/16744 beschrieben sind, 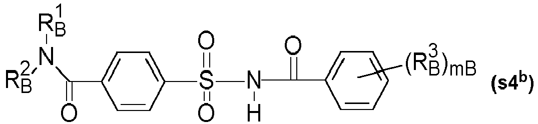 worin
      R_{B}¹, R_{B}² unabhängig voneinander Wasserstoff, (C₁-C₆)Alkyl, (C₃-C₆)Cycloalkyl, (C₃-C₆)Alkenyl, (C₃-C₆)Alkinyl,
      R_{B}³ Halogen, (C₁-C₄)Alkyl, (C₁-C₄)Haloalkyl oder (C₁-C₄)Alkoxy und
      m_{B} 1 oder 2 bedeuten,
      z.B. solche worin
      R_{B}¹ = Cyclopropyl, R_{B}² = Wasserstoff und (R_{B}³) = 2-OMe ist ("Cyprosulfamide", S4-1),
      R_{B}¹ = Cyclopropyl, R_{B}² = Wasserstoff und (R_{B}³) = 5-Cl-2-OMe ist (S4-2),
      R_{B}¹ = Ethyl, R_{B}² = Wasserstoff und (R_{B}³) = 2-OMe ist (S4-3),
      R_{B}¹ = Isopropyl, R_{B}² = Wasserstoff und (R_{B}³) = 5-Cl-2-OMe ist (S4-4) und
      R_{B}¹ = Isopropyl, R_{B}² = Wasserstoff und (R_{B}³) = 2-OMe ist (S4-5);
   s4^{c}) Verbindungen aus der Klasse der Benzoylsulfamoylphenylharnstoffe der Formel (S4^{c}), wie sie in der EP-A-365484 beschrieben sind, 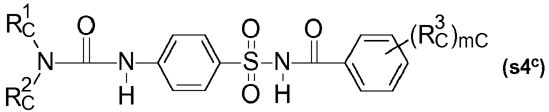 worin
      R_{C}¹, R_{C}² unabhängig voneinander Wasserstoff, (C₁-C₈)Alkyl, (C₃-C₈)Cycloalkyl, (C₃-C₆)Alkenyl, (C₃-C₆)Alkinyl,
      R_{C}³ Halogen, (C₁-C₄)Alkyl, (C₁-C₄)Alkoxy, CF₃ und
      m_{C} 1 oder 2 bedeuten;
      beispielsweise
         1-[4-(N-2-Methoxybenzoylsulfamoyl)phenyl]-3-methylharnstoff,
         1-[4-(N-2-Methoxybenzoylsulfamoyl)phenyl]-3,3-dimethylharnstoff,
         1-[4-(N-4,5-Dimethylbenzoylsulfamoyl)phenyl]-3-methylharnstoff;
   s4^{d}) Verbindungen vom Typ der N-Phenylsulfonylterephthalamide der Formel (S4^{d}) und deren Salze, die z.B. bekannt sind aus CN 101838227, 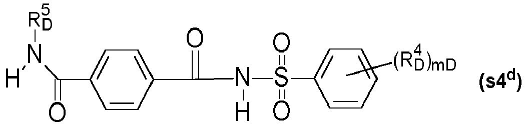 worin
      R_{D}⁴ Halogen, (C₁-C₄)Alkyl, (C₁-C₄)Alkoxy, CF₃;
      m_{D} 1 oder 2;
      R_{D}⁵ Wasserstoff, (C₁-C₆)Alkyl, (C₃-C₆)Cycloalkyl, (C₂-C₆)Alkenyl, (C₂-C₆)Alkinyl, (C₅-C₆)Cycloalkenyl bedeutet.
s5) Wirkstoffe aus der Klasse der Hydroxyaromaten und der aromatisch-aliphatischen Carbonsäurederivate (S5), z.B.
   3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
s6) Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydro-chinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
s7) Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
s8) Verbindungen der Formel (S8),wie sie in der WO-A-98/27049 beschrieben sind, 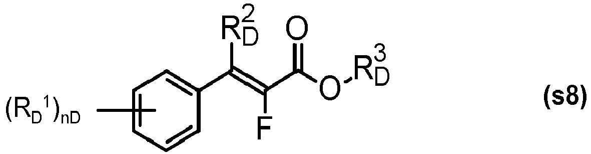 worin die Symbole und Indizes folgende Bedeutungen haben:
   R_{D}¹ ist Halogen, (C₁-C₄)Alkyl, (C₁-C₄)Haloalkyl, (C₁-C₄)Alkoxy, (C₁-C₄)Haloalkoxy,
   R_{D}² ist Wasserstoff oder (C₁-C₄)Alkyl,
   R_{D}³ ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze,
   n_{D} ist eine ganze Zahl von 0 bis 2.
s9) Wirkstoffe aus der Klasse der 3-(5-Tetrazolylcarbonyl)-2-chinolone (S9), z.B. 1,2-Dihydro-4-hydroxy-1-ethyl-3-(5-tetrazolylcarbonyl)-2-chinolon (CAS-Reg.Nr.: 219479-18-2), 1,2-Dihydro-4-hydroxy-1-methyl-3-(5-tetrazolyl-carbonyl)-2-chinolon (CAS-Reg.Nr. 95855-00-8), wie sie in der WO-A-1999/000020 beschrieben sind.
s10) Verbindungen der Formeln (S10^{a}) oder (S10^{b}), wie sie in der WO-A-2007/023719 und WO-A-2007/023764 beschrieben sind, 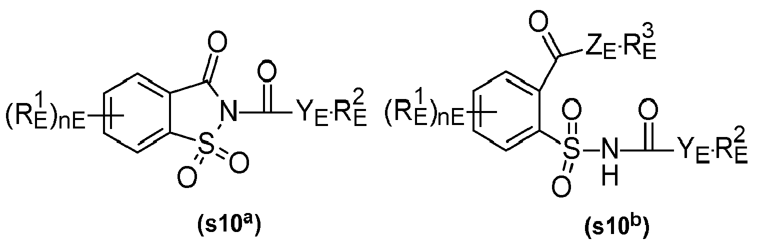 worin
   R_{E}¹ Halogen, (C₁-C₄)Alkyl, Methoxy, Nitro, Cyano, CF₃, OCF₃
   Y_{E}, Z_{E} unabhängig voneinander O oder S,
   n_{E} eine ganze Zahl von 0 bis 4,
   R_{E}² (C₁-C₁₆)Alkyl, (C₂-C₆)Alkenyl, (C₃-C₆)Cycloalkyl, Aryl; Benzyl, Halogenbenzyl,
   R_{E}³ Wasserstoff oder (C₁-C₆)Alkyl bedeuten.
s11) Wirkstoffe vom Typ der Oxyimino-Verbindungen (S11), die als Saatbeizmittel bekannt sind, wie z. B.
   "Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
   "Fluxofenim" (1-(4-Chlorphenyl)-2,2,2-trifluor-1-ethanon-O-(1,3-dioxolan-2-ylmethyl)-oxim) (S11-2), das als Saatbeiz-Safener für Hirse gegen Schäden von Metolachlor bekannt ist, und
   "Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.
s12) Wirkstoffe aus der Klasse der Isothiochromanone (S12), wie z.B. Methyl-[(3-oxo-1H-2-benzothiopyran-4(3H)-yliden)methoxy]acetat (CAS-Reg.Nr. 205121-04-6) (S12-1) und verwandte Verbindungen aus WO-A-1998/13361.
s13) Eine oder mehrere Verbindungen aus Gruppe (S 13):
   "Naphthalic anhydrid" (1,8-Naphthalindicarbonsäureanhydrid) (S13-1), das als Saatbeiz-Safener für Mais gegen Schäden von Thiocarbamatherbiziden bekannt ist,
   "Fenclorim" (4,6-Dichlor-2-phenylpyrimidin) (S 13-2), das als Safener für Pretilachlor in gesätem Reis bekannt ist,
   "Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
   "CL 304415" (CAS-Reg.Nr. 31541-57-8)
      (4-Carboxy-3,4-dihydro-2H-1-benzopyran-4-essigsäure) (S 13-4) der Firma American Cyanamid, das als Safener für Mais gegen Schäden von Imidazolinonen bekannt ist,
   "MG 191" (CAS-Reg.Nr. 96420-72-3) (2-Dichlormethyl-2-methyl-1,3-dioxolan) (S13-5) der Firma Nitrokemia, das als Safener für Mais bekannt ist,
   "MG 838" (CAS-Reg.Nr. 133993-74-5)
      (2-propenyl 1-oxa-4-azaspiro[4.5]decan-4-carbodithioat) (S13-6) der Firma Nitrokemia
   "Disulfoton" (O,O-Diethyl S-2-ethylthioethyl phosphordithioat) (S13-7),
   "Dietholate" (O,O-Diethyl-O-phenylphosphorothioat) (S13-8),
   "Mephenate" (4-Chlorphenyl-methylcarbamat) (S13-9).
s14) Wirkstoffe, die neben einer herbiziden Wirkung gegen Schadpflanzen auch Safenerwirkung an Kulturpflanzen wie Reis aufweisen, wie z. B.
   "Dimepiperate" oder "MY-93" (S-1-Methyl-1-phenylethyl-piperidin-1-carbothioat), das als Safener für Reis gegen Schäden des Herbizids Molinate bekannt ist,
   "Daimuron" oder "SK 23" (1-(1-Methyl-1-phenylethyl)-3-p-tolyl-harnstoffj, das als Safener für Reis gegen Schäden des Herbizids Imazosulfuron bekannt ist,
   "Cumyluron" = "JC-940" (3-(2-Chlorphenylmethyl)-1-(1-methyl-1-phenyl-ethyl)harnstoff, siehe JP-A-60087254), das als Safener für Reis gegen Schäden einiger Herbizide bekannt ist,
   "Methoxyphenon" oder "NK 049" (3,3'-Dimethyl-4-methoxy-benzophenon), das als Safener für Reis gegen Schäden einiger Herbizide bekannt ist,
   "CSB" (1-Brom-4-(chlormethylsulfonyl)benzol) von Kumiai, (CAS-Reg.Nr. 54091-06-4), das als Safener gegen Schäden einiger Herbizide in Reis bekannt ist.
s15) Verbindungen der Formel (S15) oder deren Tautomere, 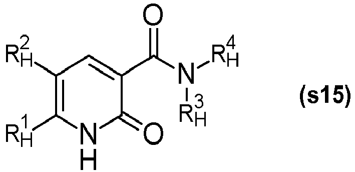 wie sie in der WO-A-2008/131861 und WO-A-2008/131860 beschrieben sind,
   worin
   R_{H}¹ einen (C₁-C₆)Haloalkylrest bedeutet und
   R_{H}² Wasserstoff oder Halogen bedeutet und
   R_{H}³, R_{H}⁴ unabhängig voneinander Wasserstoff, (C₁-C₁₆)Alkyl, (C₂-C₁₆)Alkenyl oder (C₂-C₁₆)Alkinyl,
      wobei jeder der letztgenannten 3 Reste unsubstituiert oder durch einen oder mehrere Reste aus der Gruppe Halogen, Hydroxy, Cyano, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
      oder (C₃-C₆)Cycloalkyl, (C₄-C₆)Cycloalkenyl, (C₃-C₆)Cycloalkyl, das an einer Seite des Rings mit einem 4 bis 6-gliedrigen gesättigten oder ungesättigten carbocyclischen Ring kondensiert ist, oder (C₄-C₆)Cycloalkenyl, das an einer Seite des Rings mit einem 4 bis 6-gliedrigen gesättigten oder ungesättigten carbocyclischen Ring kondensiert ist,
      wobei jeder der letztgenannten 4 Reste unsubstituiert oder durch einen oder mehrere Reste aus der Gruppe Halogen, Hydroxy, Cyano, (C₁-C₄)Alkyl, (C₁-C₄)Haloalkyl, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
      bedeutet oder
   R_{H}³ (C₁-C₄)-Alkoxy, (C₂-C₄)Alkenyloxy, (C₂-C₆)Alkinyloxy oder (C₂-C₄)Haloalkoxy bedeutet und
   R_{H}⁴ Wasserstoff oder (C₁-C₄)-Alkyl bedeutet oder
   R_{H}³ und R_{H}⁴ zusammen mit dem direkt gebundenen N-Atom einen vier- bis achtgliedrigen heterocyclischen Ring, der neben dem N-Atom auch weitere Heteroringatome, vorzugsweise bis zu zwei weitere Heteroringatome aus der Gruppe N, O und S enthalten kann und der unsubstituiert oder durch einen oder mehrere Reste aus der Gruppe Halogen, Cyano, Nitro, (C₁-C₄)Alkyl, (C₁-C₄)Haloalkyl, (C₁-C₄)Alkoxy, (C₁-C₄)Haloalkoxy und (C₁-C₄)Alkylthio substituiert ist, bedeutet.
s16) Wirkstoffe, die vorrangig als Herbizide eingesetzt werden, jedoch auch Safenerwirkung auf Kulturpflanzen aufweisen, z. B.
   (2,4-Dichlorphenoxy)essigsäure (2,4-D),
   (4-Chlorphenoxy)essigsäure,
   (R,S)-2-(4-Chlor-o-tolyloxy)propionsäure (Mecoprop),
   4-(2,4-Dichlorphenoxy)buttersäure (2,4-DB),
   (4-Chlor-o-tolyloxy)essigsäure (MCPA),
   4-(4-Chlor-o-tolyloxy)buttersäure,
   4-(4-Chlorphenoxy)buttersäure,
   3,6-Dichlor-2-methoxybenzoesäure (Dicamba),
   1-(Ethoxycarbonyl)ethyl-3,6-dichlor-2-methoxybenzoat (Lactidichlor-ethyl).

Bevorzugte Safener s) sind ausgewählt aus der Gruppe Isoxadifen-ethyl, Cyprosulfamide, Cloquintocet-mexyl und Mefenpyr-diethyl. Besonders bevorzugt ist Mefenpyr-diethyl und Cloquintocet-mexyl. Ganz besonders bevorzugt ist Mefenpyr-diethyl.

Besonders bevorzugt sind herbizide Wirkstoffe a') ausgewählt aus der Gruppe:

Flufenacet, Prosulfocarb, Pendimethalin, Diflufenican, Aclonifen, Metribuzin, Pyroxasulfone, Propoxycarbazone, Thiencarbazone-methyl, Fenoxaprop, Bromoxynil, Halauxifen-methyl, 2,4-D, MCPA.

Ganz besonders bevorzugt sind die herbiziden Wirkstoffe a') Flufenacet, Pyroxasulfone, Diflufenican.

Besonders bevorzugt sind auch Mischungen aus ein oder mehreren herbiziden Wirkstoffen a') ausgewählt aus der Gruppe:

Flufenacet und Pethoxamid; Flufenacet und Aclonifen; Flufenacet und Metribuzin; Flufenacet und Halauxifen-methyl; Prosulfocarb und Diflufenican; Prosulfocarb und Aclonifen; Prosulfocarb und Metribuzin; Prosulfocarb und Flufenacet; Prosulfocarb und Halauxifen-methyl; Pendimethalin und Diflufenican; Pendimethalin und Aclonifen; Pendimethalin und Metribuzin; Pendimethalin und Halauxifen-methyl; Metribuzin und Diflufenican; Halauxifen-methyl und Diflufenican; Flufenacet und Diflufenican; Metribuzin und Aclonifen, Halauxifen-methyl und Aclonifen; Pyroxasulfone und Diflufenican; Aclonifen und Diflufenican; Pyroxasulfone und Prosulfocarb; Pyroxasulfone und Aclonifen; Pyroxasulfone und Metribuzin; Pyroxasulfone und Flufenacet; Pyroxasulfone und Halauxifen-methyl oder Flufenacet und Pyroxasulfone und Dilflufenican; Aclonifen und Diflufenican und Flufenacet; Metribuzin und Diflufenican und Flufenacet.

Ganz besonders bevorzugt sind die Mischungen ausgewählt aus: Flufenacet und Diflufenican; Flufenacet und Pyroxasulfone; Aclonifen und Diflufenican; Metribuzin und Diflufenican; Flufenacet und Aclonifen; Flufenacet und Metribuzin; Flufenacet und Pyroxasulfone und Dilflufenican; Aclonifen und Diflufenican und Flufenacet; Metribuzin und Diflufenican und Flufenacet.

Ebenfalls können die genannten herbiziden Wirkstoffe a') sowie deren Mischungen mit einem Safener s) ausgewählt aus der Gruppe Isoxadifen-ethyl, Cyprosulfamide, Cloquintocet-mexyl und Mefenpyr-diethyl eingesetzt werden.

Ganz besonders bevorzugt sind die Mischungen enthaltend a') und s) ausgewählt aus: Flufenacet und Diflufenican und Mefenpyr-diethyl; Flufenacet und Diflufenican und Cloquintocet-mexyl, Aclonifen und Diflufenican und Mefenpyr-diethyl; Pyroxasulfone und Mefenpyr-diethyl.

Geeignete anionische Dispergiermittel e1) wie Emulgatoren, Tenside, Netzmittel und Dispergatoren sind beispielweise Alkali-, Erdalkali- oder Ammoniumsalze von Sulfonaten, Sulfaten, Phosphaten, Carboxylaten und deren Mischungen wie z.B. die Salze der Alkylsulphonsäuren oder Alkylphosphorsäuren sowie Alkylarylsulphon- oder Alkylarylphosphorsäuren, Diphenylsulfonate, alpha-Olefinsulfonate, Ligninsulfonate, Sulfonate von Fettsäuren und Ölen, Sulfonate von ethoxylierten Alkylphenolen, Sulfonate von alkoxylierten Arylphenolen, Sulfonate von kondensierten Naphthalinen, Sulfonate von Dodecyl- und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen oder von Fettsäureestern. Beispiele für Phosphate sind Phosphatester. Beispiele für Carboxylate sind Alkylcarboxylate sowie carboxylierte Alkohol- oder Alkylphenolethoxylate. Ebenfalls geeignet ist die Gruppe der anionischen Emulgatoren der Alkalimetall-, Erdalkalimetall- und Ammoniumsalze der Polystyrolsulfonsäuren, Salze der Polyvinylsulphonsäuren, Salze der Alkylnaphthalinsulphonsäuren, Salze von Alkylnaphthalinsulphonsäure-Formaldehyd Kondensationsprodukte, Salze von Kondensationsprodukte der Naphthalinsulphonsäure, Phenolsulphonsäure und Formaldehyd. Beispiele sind Kalziumdodecylbenzensulfonat wie Rhodocal^{®} 70/B (Solvay), Phenylsulfonat CA100 (Clariant) oder Isopropylammoniumdodecylbenzenesulfonate wie Atlox^{®} 3300B (Croda).

Weitere typische Vertreter sind unter anderem Phenylsulfonat CA (Ca-Dodecylbenzolsulfonat), Soprophor®-Typen (gegebenenfalls veresterte Derivate von Tristyrylphenoi-Ethoxylaten), Emmulsogen^{®} 3510 (alkyliertes EO/PO Copolymerisat), Emulsogen^{®} EL 400 (ethoxyliertes Ricinusöl), Tween®-Typen (fettacylierte Sorbitan-Ethoxylate), Calsogen^{®} AR 100 (Ca-Dodecylbenzolsulfonat). Bevorzugt sind Kombinationen aus Salzen alkylierter aromatischer Sulfonsäuren, wie Phenylsulfonat Ca und/oder Calsogen^{®} AR 100, mit alkylierten Copolymerisaten aus Ethylen- und Propylenoxid, wie Emulsogen^{®} 3510. Besonders bevorzugt sind Kombinationen aus Salzen der Dodecylbenzolsulfonsäure, wie Calsogen^{®} AR 1 00 mit alkyliertem Copolymerisat aus Ethylen- und Propylenoxid, wie Emulsogen^{®} 3510.

Beispiele für weitere anionische Emulgatoren e1) aus der Gruppe der Naphthalinsulfonate sind Galoryl^{®} MT 800 (Natrium-Dibutylnaphthalinsulfonsäure), Morwet^{®} IP (Natriumdiisopropylnaphthalinsulfonat) und Nekal^{®} BX (Alkylnaphthalinsulfonat). Beispiele für anionische Tenside aus der Gruppe der Kondensationsprodukte von Naphthalinsulfonaten mit Formaldehyd sind Galoryl^{®} DT 201 (Naphthalinsulfonsäure Hydroxypolymer mit Formaldeyd und Methylphenol Natriumsalz), Galoryl^{®} DT 250 (Kondensationsprodukt aus Phenol- und Naphthalinsulfonaten), Reserve^{®} C (Kondensationsprodukt aus Phenol- und Naphthalinsulfonaten) oder Morwet^{®} D-425, Tersperse^{®} 2020. Bevorzugt sind 1,2 mit DiButyl- oder Di-Isobutyl-substituierte Naphthalinsulfonate, wie z.B. Produkte wie Galoryl^{®} MT 800 (CFPI-Nufarm) und Nekal^{®} BX (BASF). Weitere typische Tenside sind Soprophor^{®} 3D33, Soprophor^{®} 4D384, Soprophor^{®} BSU, Soprophor^{®} CY/8 (Solvay) und Hoe^{®} S3474 und in Form der Sapogenat^{®} T-Produkte (Clariant), beispielsweise Sapogenat^{®} T 100.

Als nichtionische Dispergiermittel e2) wie Emulgatoren, Netzmittel, Tenside und Dispergatoren kommen übliche, in Formulierungen von agrochemischen Wirkstoffen vorhandene oberflächenative Substanzen in Frage. Beispielhaft genannt seien ethoxylierte Nonylphenole, Umsetzungsprodukte von linearen oder verzweigten Alkoholen mit Ethylenoxid und/oder Propylenoxid, Ethylenoxid-Propylenoxid-Blockcopolymere, Endgruppen-verschlossene und nicht Endgruppen-verschlossene alkoxylierte lineare und verzweigte, gesättigte und ungesättigte Alkohole (z.B. Butoxypolyethylenpropylenglycole), Umsetzungsprodukte von Alkylphenolen mit Ethylenoxid und/oder Propylenoxid, Ethylenoxid-Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristryl-phenolalkoxylate und Fettsäurepolyglykoletherester. Ganz besonders bevorzugt sind Tristyryl-phenol-ethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen. Geeignete nichtionische Emulgatoren b2) sind beispielsweise Soprophor^{®} 796/P, Lucramul^{®} CO30, Lucramul^{®} HOT, Lucramul^{®} PSI 100 oder Synperonic^{®} T304.

Geeignete nicht-ionische Dispergatoren e2) können ebenfalls ausgewählt werden aus der Gruppe enthaltend Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, und partiell hydrolysiertem Vinylacetat, Phenolharze, modifizierte Cellulose Typen wie beispielsweise Luviskol^{®} (Polyvinylpyrrolidon), Mowiol^{®} (Polyvinylalkohol) oder modifizierte Cellulose. Bevorzugt sind Polyvinylpyrrolidon-Typen, besonders bevorzugt sind Typen von niedrigem Molekulargewicht wie Luviskol^{®} K30 oder Sokalan^{®} K30.

Als weitere nicht-ionische Emulgatoren e2) aus der Gruppe der Di- und Tri-block-copolymere aus Alkylenoxiden kommen z.B. Verbindungen in Frage, die auf Basis von Ethylen- und Propylenoxid aufgebaut sind, mit mittleren Molmassen zwischen 200 und 10000, bevorzugt 1000 bis 4000 g/mol, wobei der Massenanteil des polyethoxylierte Blocks zwischen 10 und 80% variiert, wie z.B. Synperonic^{®} PE-Reihe (Uniqema), Pluronic^{®} PE-Reihe (BASF), VOP^{®} 32- oder Genapol^{®}PF-Reihe (Clariant).

Im Falle des Einsatzes von Safener als Komponente a') werden Trägermaterialien f) in den SC's eingesetzt.

Geeignete Trägermaterialien f) sind ausgewählt aus der Gruppe der der hochsaugfähigen Träger mit einer Aufnahmefähigkeit von wenigstens 200 g Dibutylphthalat pro 100 g Trägermaterial.

Bevorzugte hochsaugfähige Träger f) sind Kieselsäuren wie beispielsweise Sipernat^{®}-Typen (synthetische Fällungskieselsäure von hoher Saugfähigkeit) sowie pyrogene Kieselsäure (Aerosil^{®} Typen). Bevorzugt ist Fällungskieselsäure.

Die erfindungsgemäßen Kapselsuspensionskonzentrate eignen sich hervorragend zur Applikation der enthaltenen agrochemischen Wirkstoffe auf Pflanzen und/oder deren Lebensraum. Sie gewährleisten die Freisetzung der aktiven Komponenten in der jeweils gewünschten Menge über einen längeren Zeitraum.

Die erfindungsgemäßen Kapselsuspensionskonzentrate können entweder als solche oder nach vorherigem Verdünnen mit Wasser in der Praxis eingesetzt werden. Die Anwendung erfolgt dabei nach üblichen Methoden, also z.B. durch Gießen, Verspritzen oder Versprühen.

Die Aufwandmenge an erfindungsgemäßen Kapselsuspensionskonzentraten kann innerhalb eines größeren Bereiches variiert werden. Sie richtet sich nach den jeweiligen agrochemischen Wirkstoffen und nach deren Gehalt in den Mikrokapsel-Formulierungen.

Eine bevorzugte Verwendung der erfindungsgemäßen Kapselsuspensionskonzentrate ist als Herbizid im Getreide und Raps, ganz besonders bevorzugt im Wintergetreide und hierbei im Vorauflauf sowie im Nachauflauf. Bevorzugt ist daher die Verwendung in einer Herbstapplikation kurz nach dem Sähen des Getreide und kurz vor bzw. kurz nach dem Aufkeimen der Unkräuter und vor allem Ungräser.

Die erfindungsgemäßen Kapselsuspensionskonzentrate können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der erfindungsgemäßen Kapselsuspensionskonzentrate in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Gegenstand der vorliegenden Erfindung ist somit weiterhin ein Verfahren zur Bekämpfung von unerwünschten Pflanzen in Pflanzenkulturen, das dadurch gekennzeichnet ist, dass die erfindungsgemäßen Kapselsuspensionskonzentrate auf die Pflanzen (z.B. Schadpflanzen wie mono- oder dikotyle Unkräuter oder unerwünschte Kulturpflanzen), oder die Fläche, auf der die Pflanzen wachsen ausgebracht werden.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein.

Monokotyle Unkräuter entstammen z.B. den Gattungen: *Aegilops, Agropyron, Agrostis, Alopecurus, Apera, Avena*, *Brachiaria, Bromus*, *Cenchrus, Commelina*, *Cynodon, Cyperus, Dactyloctenium, Digitaria, Echinochloa, Eleochnris, Eleusine, Eragrostis, Eriochloa, Festuca, Fimbristylis*, *Heteranthera*, *Imperata, Ischaemum, Leptochloa, Lolium*, *Monochoria, Panicum*, *Paspalum*, *Phalaris, Phleum*, *Poa, Rottboellia, Sagittaria, Scirpus, Setaria, and Sorghum*.

Dikotyle Unkräuter : entstammen z.B. den Gattungen *Abutilon, Amaranthus*, *Ambrosia*, *Anoda, Anthemis*, *Aphanes, Artemisia*, *Atriplex, Bellis, Bidens, Capsella, Carduus, Cassia, Centaurea, Chenopodium*, *Cirsium*, *Convolvulus*, *Datura, Desmodium*, *Emex*, *Erysimum*, *Euphorbia, Galeopsis, Galinsoga, Gallium, Hibiscus, Ipomoea*, *Kochia, Lamium, Lepidium*, *Lindernia*, *Matricaria, Mentha, Mercurialis, Mullugo, Myosotis*, *Papaver*, *Pharbitis, Plantago, Poligonum, Portulaca, Ranunculus*, *Raphanus, Rorippa, Rotala, Rumex*, *Salsola, Senecio, Sesbania, Sida, Sinapis, Solanum*, *Sonchus, Sphenoclea, Stellaria, Taraxacum*, *Thlaspi, Trifolium*, *Urtica*, *Veronica, Viola, and Xanthium.*

Bevorzugt werden die erfindungsgemäßen Kapselsuspensionskonzentrate zur Bekämpfung des Unkrauts der Spezies *Alopecurus myosuroides* HUDS (oder Acker-Fuchsschwanzgras) verwendet.

Gegenstand der Erfindung ist auch die Verwendung der erfindungsgemäßen Kapselsuspensionskonzentrate zur Bekämpfung von unerwünschtem Pflanzenwuchs, vorzugsweise in Kulturen von Nutzpflanzen.

Werden die erfindungsgemäßen Kapselsuspensionskonzentrate vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen Kapselsuspensionskonzentrate Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen Kapselsuspensionskonzentrate zeichnen sich durch eine schnell einsetzende und lang andauernde herbizide Wirkung aus. Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen Kapselsuspensionskonzentrate eine ausgezeichnete herbizide Aktivität gegenüber mono und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die erfindungsgemäßen Kapselsuspensionskonzentrate eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen Kapselsuspensionskonzentrate hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Des Weiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen Kapselsuspensionskonzentrate auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z.B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Kapselsuspensionskonzentrate in wirtschaftlich bedeutenden transgenen Kulturen von Nutz- und Zierpflanzen, z.B. von Gramineen-Kulturen wie Weizen, Gerste, Roggen, Hafer, Hirse, Reis, Raps und Mais. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind. Besonders bevorzugt ist die Anwendung auf Weizen, Gerste, Roggen und Raps, bevorzugt Winterraps.

Bei der Anwendung der erfindungsgemäßen Kapselsuspensionskonzentrate in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße Kapselsuspensionskonzentrate auf die Schadpflanzen, Pflanzenteile, Pflanzensamen oder die Fläche auf der die Pflanzen wachsen, z.B. die Anbaufläche im appliziert. Bevorzugt erfolgt die Anwendung der erfindungsgemäßen Kapselsuspensionskonzentrate im Vorauflaufverfahren und Nachauflaufverfahren. Besonders bevorzugt im Vorauflaufverfahren.

Gegenstand der Erfindung ist deshalb auch die Verwendung der erfindungsgemäßen Kapselsuspensionskonzentrate zur Bekämpfung von Schadpflanzen in transgenen Kulturpflanzen.

Ein weiterer bevorzugter Gegenstand der Erfindung ist die Verwendung der erfindungsgemäßen Kapselsuspensionskonzentrate zur Behandlung von Pflanzen, bei denen das Saatgut mit Safener behandelt wurde.

Die Erfindung wird durch die folgenden Beispiele veranschaulicht.

### Beispiele

### Verwendete Substanzen und Abkürzungen:

Die in den nachfolgenden Beispielen verwendeten Begriffe haben folgende Bedeutung:
- Mefenpyr-diethyl: Diethyl (*RS*)-1-(2,4-dichlorophenyl)-5-methyl-2-pyrazoline-3,5-dicarboxylate, (Bayer CropScience AG), Schmelzbereich 50-55°C
- Flufenacet: 4'-Fluoro-N-isopropyl-2-(5-trifluoromethyl-1,3,4-thiadiazol-2-yloxy)acetanilide (Bayer CropScience AG)
- Diflufenican: 2',4'-Difluoro-2-(α,α,α-trifluoro-m-tolyloxy)nicotinanilide (Bayer CropScience AG)
- Cloquintocet-mexyl: (*RS*)-1-Methylhexyl (5-chloroquinolin-8yloxy)acetate (Syngenta), Schmelzbereich 60-70°C
- Clomazone: CPMI, CAS 81777-89-1, IUPAC 2-(2-chlorobenzyl)-4,4-dimethyl-1,2-oxazolidin-3-one
- DCPMI: 2-[(2,4-Dichlorphenyl)-methyl]-4,4'-dimethyl-3-isoxazolidinone (CAS Nummer 81777-95-9 bzw. IPUAC 2-(2,4-dichlorobenzyl)-4,4-dimethyl-1,2-oxazolidin-3-one, im Folgenden abgekürzt DCPMI)
- Morwet^{®} D-425: Naphthalinsulfonsäure-formaldehyd-kondensat Natriumsalz (Akzo Nobel)
- Pluronic^{®} PE 10500: Propylenoxid-Ethylenoxid-(PO-EO)-Blockpolymer (BASF)
- Citronensäure: mehrbasige organische Säure
- Rhodopol^{®} G: Xanthan Derivat (Solvay)
- Silcolapse^{®} 426R, 411: Silikon-Entschäumer (Solvay)
- Glycerin: Frostschutzmittel
- Proxel^{®} GXL: Konservierungsmittel (Biozid, Proxel)
- Solvesso^{®} 200 ND: Mineralöl, ExxonMobil, Naphthalinfrei
- Desmodur^{®} 44V20L: Polymeres MDI, Covestro AG, Funktionalität 2,7.
- Desmodur^{®} T80: Diisocyanat, Funktionalität 2,0, Covestro AG, Basis Tolyulyendiisocyanat
- DETA: Diethylentriam, Sigma-Aldrich
- HDA: 1,6-Hexamethylendiam, BASF
- Kuraray Poval^{®} 26-88: Polyvinylalkohol von Kuraray, ca. 88% hydrolyisertes Polyvinylacetat
- Desmodur^{®} N3300: modifiziertes, trimerisiertes aliphatisches Polyisocyanat auf Basis von HDI, Covestro AG, Funktionalität 3,3; freies monomeres Isocyanat < 0.5%.
- Rhodocal^{®} 60BE: Ionischer Emulgator, Solvay, Calciumdodecylsulfat
- Emulsogen^{®} EL 400: nicht-ionischer Emulgator, Croda, Castor-oil mit 40 Ethylenoxideinheiten

### Herstellungsbeispiel

### Beispiel 1 (erfindungsgemäß)

15 g DCPMI wurden bei 50°C in 32 g Solvesso^{®} 200 ND gelöst (entspricht 32% gelöstem Wirkstoff).

Die Lösung wurde zu einem Gemisch aus 0,8 g Desmodur^{®} T80, 0,64 g Desmodur^{®} 44V20L, 0,51 g Kuraray Poval^{®} 26-88 sowie 0,2 g Silcolapse^{®} 426R und 0,18 g Kathon^{®} CG/ICP in 50 g Wasser gegeben. Es wurde mit einem Dispergator bei 15 000 Upm 10 Minuten dispergiert. Das dabei entstehende Reaktionsgemisch wird innerhalb von einer Stunde auf 70°C aufgeheizt und weitere 4 Stunden unter langsames Rühren bei 70°C gehalten. Nach dem anschließenden Abkühlen auf Raumtemperatur werden 0,58 g einer 30% wässrigen Ammoniaklösung zugegeben. Es wird mit 0.2 g Rhodopol^{®} G verdickt. Es wird auf diese Weise eine Mikrokapsel-Formulierung mit einem Gehalt an DCPMI von 150 g/l und einer Partikelgröße von 8,3 µm (d90) erhalten.

### Beispiel 2 (erfindungsgemäß)

15 g DCPMI wurden bei 50°C in 32 g Solvesso^{®} 200 ND gelöst (entspricht 32% gelöstem Wirkstoff).

Die Lösung wurde zu einem Gemisch aus 0,8 g Desmodur^{®}® T80, 0,64 g Desmodur^{®} 44V20L, 0,51 g Kuraray Poval^{®}26-88 sowie 0,2 g Silcolapse^{®} 426R und 0,18 g Kathon^{®} CG/ICP in 50 g Wasser gegeben. Es wurde mit einem Dispergator (Rotor-Stator-System) bei 10 000 U/min 10 Minuten dispergiert. Das dabei entstehende Reaktionsgemisch wird innerhalb von einer Stunde auf 70°C aufgeheizt und weitere 4 Stunden unter langsames Rühren bei 70°C gehalten. Nach dem anschließenden Abkühlen auf Raumtemperatur werden 0,58 g einer 30% wässrigen Ammoniaklösung zugegeben. Es wird mit 0.2 g Rhodopol^{®} G verdickt. Es wird auf diese Weise eine Mikrokapsel-Formulierung mit einem Gehalt an DCPMI von 150 g/l und einer Partikelgröße von 15,3 µm (d90) erhalten.

### Beispiel 3 (erfindungsgemäß)

15 g DCPMI wurden bei 50°C in 32 g Solvesso^{®} 200 ND gelöst (entspricht 32% gelöstem Wirkstoff).

Die Lösung wurde zu einem Gemisch aus 1,4 g Desmodur^{®} T80, 1,09 g Desmodur^{®} 44V20L, 0,51 g Kuraray Poval^{®} 26-88 sowie 0,2 g Silcolapse^{®} 426R und 0,18 g Kathon^{®} CG/ICP in 50 g Wasser gegeben. Es wurde mit einem Dispergator bei 15 000 Upm 10 Minuten dispergiert. Das dabei entstehende Reaktionsgemisch wird innerhalb von einer Stunde auf 70°C aufgeheizt und weitere 4 Stunden unter langsames Rühren bei 70°C gehalten. Nach dem anschließenden Abkühlen auf Raumtemperatur werden 0,58 g einer 30% wässrigen Ammoniaklösung zugegeben. Es wird mit 0.2 g Rhodopol^{®} G verdickt. Es wird auf diese Weise eine Mikrokapsel-Formulierung mit einem Gehalt an DCPMI von 150 g/l und einer Partikelgröße von 8,3 µm (d90) erhalten.

### Beispiel 4 (erfindungsgemäß)

15 g DCPMI wurden bei 50°C in 32 g Solvesso^{®} 200 ND gelöst (entspricht 32% gelöstem Wirkstoff).

Die Lösung wurde zu einem Gemisch aus 0,6 g Desmodur^{®} T80, 0,48 g Desmodur^{®} 44V20L, 0,51 g Kuraray Poval^{®} 26-88 sowie 0,2 g Silcolapse^{®} 426R und 0,18 g Kathon^{®} CG/ICP in 50 g Wasser gegeben. Es wurde mit einem Dispergator bei 15 000 Upm 10 Minuten dispergiert. Danach werden 0,36 g Diethylentriam zugegeben. Das dabei entstehende Reaktionsgemisch wird innerhalb von einer Stunde auf 70°C aufgeheizt und weitere 4 Stunden unter langsames Rühren bei 70°C gehalten. Nach dem anschließenden Abkühlen auf Raumtemperatur werden 0,58 g einer 30% wässrigen Ammoniaklösung zugegeben. Es wird mit 0.2 g Rhodopol^{®} G verdickt. Es wird auf diese Weise eine Mikrokapsel-Formulierung mit einem Gehalt an DCPMI von 150 g/l und einer Partikelgröße von 6,6 µm (d90) erhalten.

### Beispiel 5 (erfindungsgemäß)

15 g DCPMI wurden bei 50°C in 32 g Solvesso^{®} 200 ND gelöst (entspricht 32% gelöstem Wirkstoff).

Die Lösung wurde zu einem Gemisch aus 0,9 g Desmodur^{®} 44V20L, 0,51 g Kuraray Poval^{®} 26-88 sowie 0,2 g Silcolapse^{®} 426R und 0,18 g Kathon^{®} CG/ICP in 50 g Wasser gegeben. Es wurde mit einem Dispergator bei 15 000 Upm 10 Minuten dispergiert. Danach wurden 0,54 g 1,6-Hexamethylendiam in Wasser gelöst (als 40 Gew.-% Lösung) zugegeben. Das dabei entstehende Reaktionsgemisch wird innerhalb von einer Stunde auf 70°C aufgeheizt und weitere 4 Stunden unter langsames Rühren bei 70°C gehalten. Nach dem anschließenden Abkühlen auf Raumtemperatur werden 0,58 g einer 30% wässrigen Ammoniaklösung zugegeben. Es wird mit 0.2 g Rhodopol^{®} G verdickt. Es wird auf diese Weise eine Mikrokapsel-Formulierung mit einem Gehalt an DCPMI von 150 g/l und einer Partikelgröße von 7,9 µm (d90) erhalten.

### Beispiel 6 (erfindundungsgemäß)

15 g DCPMI wurden bei 50°C in 32 g Solvesso^{®} 200 ND gelöst (entspricht 32% gelöstem Wirkstoff).

Die Lösung wurde zu einem Gemisch aus 1,22 g Desmodur^{®} N3300 g, 0,51 g Kuraray Poval^{®} 26-88 sowie 0,2 g Silcolapse^{®} 426R und 0,18 g Kathon^{®} CG/ICP in 50 g Wasser gegeben. Es wurde mit einem Dispergator bei 15 000 Upm 10 Minuten dispergiert. Danach werden 0,44 g einer 50 Gew.-%igen Lösung von Diethylentriamin in Wasser zugegeben. Das dabei entstehende Reaktionsgemisch wird innerhalb von einer Stunde auf 70°C aufgeheizt und weitere 4 Stunden unter langsames Rühren bei 70°C gehalten. Nach dem anschließenden Abkühlen auf Raumtemperatur werden 0,58 g einer 30% wässrigen Ammoniaklösung zugegeben. Es wird mit 0.2 g Rhodopol^{®} G verdickt. Es wird auf diese Weise eine Mikrokapsel-Formulierung mit einem Gehalt an DCPMI von 150 g/l und einer Partikelgröße von 5,4 µm (d90) erhalten.

### Vergleichsbeispiel 1 (analog WO 96/14743, Tabelle 1, Beispiel c)

140 g Clomazone wurden bei 50°C in 30 g Solvesso^{®} 200 ND gelöst (entspricht 82% gelöstem Wirkstoff).

Die Lösung wurde zu einem Gemisch aus 30 g Desmodur^{®} 44V20L, 4 g Kuraray Poval^{®} 26-88, 430 g Wasser sowie 1,8 g Silcolapse^{®}426R und 0,18 g Kathon^{®} CG/ICP gegeben. Es wurde mit einem Dispergator bei 10 000 Upm innerhalb 10 Minuten dispergiert. Anschließend werden 19 g 1,6-Hexamethylendiamin zu gegeben. Das dabei entstehende Reaktionsgemisch wird innerhalb von einer Stunde auf 70°C aufgeheizt und weitere 4 Stunden unter langsames Rühren bei 70°C gehalten. Nach dem anschließenden Abkühlen auf Raumtemperatur werden 0,58 g einer 30% wässrigen Ammoniaklösung zugegeben. Es wird mit 0.2 g Rhodopol^{®} G verdickt. Es wird auf diese Weise eine Mikrokapsel-Formulierung mit einem Gehalt an Clomazone von 200 g/l und einer Partikelgröße von 15,3 µm (d90) erhalten.

Das Verhältnis von Wirkstoff zu Isocyanat beträgt 4,6:1.

Das Verhältnis von Wirkstoff zu Lösemittel beträgt 4,6:1.

Das Verhältnis Isocyanat zu aminischem Vernetzer beträgt 1,58:1.

### Vergleichsbeispiel 2a (mit DCPMI analog WO 96/14743, Tabelle 1, Beispiel c)

DCPMI löst sich deutlich schlechter als Clomazone. Der Ansatz konnte nicht durchgeführt werden.

### Versleichsbeispiel 2b (mit DCPMI Variation von Vergleichsbeispiel 1 mit in Solvesso^{®} 200 ND gelöstem DCPMI)

Es wurde wie in Vergleichsbeispiel 1 verfahren, allerdings wurden 15 g DCPMI bei 50°C in 32 g Solvesso^{®} 200 ND gelöst (entspricht 32% gelöstem Wirkstoff).

Das Verhältnis von Wirkstoff zu Isocyanat beträgt 4,6:1.

Das Verhältnis von Wirkstoff zu Lösemittel beträgt 1:2.

Das Verhältnis Isocyanat zu aminischem Vernetzer beträgt 1,58:1.

Es wird deutlich mehr Polyurethan/-harnstoff verwendet als in den erfindungsgemäßen Rezepturen.

### Herstellung eines Suspensionskonzentrats (SC):

Es wird zunächst Wasser bei Raumtemperatur vorgelegt. Unter Rühren werden anschließend c, e1, e2, und Wirkstoffe a sowie a') zugegeben. Im Falle von a') Menfenpyr-diethyl wird diese warm bei 65°C zugegeben und es wird 2 bis 24 h gerührt, bis sich Kristalle bilden. Anschließend erfolgt eine Nassvermahlung beispielsweise mittels einer Perlmühle. Abschließend wird der organische Verdicker (Komponente c) zugegeben.

### Herstellung eines organischen Emulsionskonzentrats (EC):

Der Wirkstoff wird bei 30°C mit dem Lösemittel und den Emulgatoren verrührt.

**Tabelle 1: Hergestellte Formulierungen (Angaben erfolgen in Gewichtsprozent, Gew.-%)**

| **Komponente** | | **Beispiel-Nr.** | | | | | | |
|---|---|---|---|---|---|---|---|---|
| | | **7** **SC** | **8** **EC** | **9** **SC** | **10** **SC** | **11** **SC** | **12** **SC** | **13** **SC** |
| **s** | Mefenpyr-diethyl | | | 30 | | | 10 | |
| **s** | Cloquintocet-mexyl | | | | | 30 | | 10 |
| **a** | DCPMI | 40 | 10 | | | | | |
| **a'** | Diflufenican | | | | 20 | | 15 | 15 |
| **a'** | Flufenacet | | | | 40 | | 30 | 30 |
| **e1** | Rhodocal^{®} 60BE | | 4 | | | | | |
| **e2** | Emulsogen^{®} EL 400 | | 4 | | | | | |
| **e1** | Morwet^{®} D-425 | 1,0 | | 1,0 | 1,0 | 1,0 | 1,0 | 1,0 |
| **e2** | Pluronic^{®}PE 10500 | 5 | | 5 | 5 | 5 | 5 | 5 |
| **c** | Citronensäure | 0,1 | | 0,1 | 0,1 | 0,1 | 0,1 | 0,1 |
| **f** | Aerosil^{®} 200 | 0,5 | | 0,5 | | 0,5 | 0,5 | 0,5 |
| **c** | Rhodopol^{®} 23 | 0,2 | | 0,2 | 0,2 | 0,2 | 0,2 | 0,2 |
| **c** | Silcolapse^{®} 411 | 0,5 | | 0,5 | 0,5 | 0,5 | 0,5 | 0,5 |
| **c** | Glycerin | 5 | | 5 | 5 | 5 | 5 | 5 |
| **c** | Proxel^{®} GXL | 0,18 | | 0,18 | 0,18 | 0,18 | 0,18 | 0,18 |
| **Wasser** | | 52,48 | | 42,48 | 71,98 | 42,48 | 67,48 | 67,48 |
| **Solvesso^{®} 200 ND** | | | 82 | | | | | |
| **Gesamt:** | | 100 | 100 | 100 | 100 | 100 | 100 | 100 |

### Herstellung einer erfindungsgemäßen ZC Formulierung:

Es wird die jeweilige SC Formulierung mit der erfindungsgemäßen CS Formulierung gemischt:

### Beispiel 14 :

0,12 L von Beispiel 10 (entspricht 48 g Flufenacet und 24 g Diflufenican) werden mit 0,5 L Beispiel 1 (entspricht 80 g verkapseltes DCPMI) und 0,1 L (entspricht 40 g Mefenpyr-diethyl) umgerührt.

### Beispiel 15:

0,12 L von Beispiel 10 (entspricht 48 g Flufenacet und 24 g Diflufenican) werden mit 0,25 L Beispiel 1 (entspricht 40 g verkapseltes DCPMI) sowie 0,1 L Beispiel 7 (entspricht 40 g unverkapseltem DCPMI) und 0,1 L (entspricht 40 g Mefenpyr-diethyl) umgerührt.

### Bestimmung der relativen Flüchtigkeit des Wirkstoffes

Es wird eine Spritzbrühe (0,5 g Wirkstoff/L) auf je drei Teflonmebranen in einer nach oben offenen Glasbox in einem Laborabzug unter konstantem Luftstrom von 1,6 m/s bei 22°C und 60% relativer Luftfeuchtigkeit gegeben. Der Rückstand auf den Teflonmembranen wird nach Trocknung nach 0, 24 und 72 h per HPLC bestimmt. Die Flüchtigkeit wird bezogen auf den 0 h Wert.

**Tabelle 1: Bestimmung der Flüchtigkeit**

| Die Menge an Wirkstoff ist der Gehalt an DCPMI in Gew.-% | | |
|---|---|---|
| **Beispiel** | **relative Flüchtigkeit in % nach 24 h** | **relative Flüchtigkeit in % nach 72 h** |
| 1 | 88 | 85 |
| 8 | 1 | 0 |
| 3 | 90 | 90 |
| 4 | 100 | 100 |
| 7 | 3 | 0 |
| Vergleichsbeispiel 2b | 100 | 100 |

Die Ergebnisse zeigen, dass die Verkapselung die Flüchtigkeit deutlich reduzieren kann.

### Bestimmung Bioverfügbarkeit anhand einer Apfelkutikelpenetration

Es wird eine Spritzbrühe (0,5 g Wirkstoff/L) auf je drei Apfelkutikel gegeben. Es wird die Menge an Wirkstoff in den Kutikel gemessen; nach Trocknung nach 0, 24 und 72 h per HPLC bestimmt.

**Tabelle 2: Penetration von DCPMI durch die Apfelkutel Gew.-%**

| **Beispiel** | **Cuticle Penetration 24h in %** |
|---|---|
| 1 | 25 |
| 8 | 30 |
| 3 | 37 |
| 4 | 20 |
| 7 | 40 |
| Vergleichsbeispiel 2 | < 5% |

Die Bioverfügbarkeit der erfindungsgemäßen Beispiele ist auf einem sehr hohen Niveau. Das Vergleichsbeispiel 2 zeigt eine viel zu niedrige Bioverfügbarkeit.

### Feldergebnisse der herbiziden Wirksamkeit der wässrigen Dispersionen

Verfahren: Standardmäßige Herbst-Feld-Applikation von 200L/ha Spritzbrühen mit der Dosierung von 60 g Diflufenican, 120 g Flufenacet, 200 g DCPMI und 100 g Mefenpyr-diethyl pro Hektar. Ausgewertet wurde die herbizide Wirksamkeit auf den Ackerfuchsschwanz (Alopecurus myosuroides; ALOMY), die Phytotoxizität auf die Kulturpflanzen Wintergerste und Winterweizen; sowie Schäden an einer Nachbarkultur (Baumbestand, Zuckerrüben, Brokkoli). Auf einer Skala von 0-100% optisch im Vergleich zu einer unbehandelten Vergleichsgruppe bewertet: 0% = keine erkennbare Wirkung im Vergleich zur unbehandelten Vergleichsgruppe; 100% = vollständige Wirkung im Vergleich zur unbehandelten Vergleichsgruppe.

**Tabelle 3: Feldergebnisse**

| Beispiel | Herbizide Wirksamkeit gegen ALOMY | Phytotoxizität an ... | | Schäden an Nachbarkulturen |
|---|---|---|---|---|
| | | Wintergerste | Winterweizen | |
| Beispiel 14 in obiger Dosierung | 95% | 5% | 4% | akzeptabel |
| Beispiel 15 in obiger Dosierung | 95% | 5% | 4% | gerade noch aktzeptabel |
| Beispiel 10 in obiger Dosierung | 55% | 6% | 5% | akzeptabel |
| Beispiel 1-6 in obiger Dosierung | 20% | 2% | 2% | akzeptabel |
| Vergleichsbeispiel 7 in obiger Dosierung | 30% | 15% | 15% | nicht akzeptabel |
| Vergleichsbeispiel 2b in obiger Dosierung | 5% | 1% | 1% | akzeptabel |

Die erfindungsgemäßen Formulierungen mit den herbiziden Wirkstoffen zeigen eine höhere herbizide Wirksamkeit, bei weniger Schäden an den Kulturpflanzen (Phytotoxizität an den Kulturpflanzen Wintergerste und Winterweizen) bei deutlich weniger Schäden an Nachbarkulturen. Beispiel 15 ist hierbei gerade noch akzeptabel. Eine höhere Menge an freiem Wirkstoff (Beispiel 7) führt zu nicht akzeptablen Schäden an Nachbarkulturen. Eine zu dicke Kapselwand bei der Verkapselung (Vergleichsbeispiel 2b) hat keine akzeptable Wirkung.

## Patentansprüche

1. Kapselsuspensionskonzentrate enthaltend
A) eine teilchenförmige disperse Phase, enthaltend
a) ein Reaktionsprodukt aus mindestens einer Verbindung mit gegenüber isocyanatreaktiven Gruppe a1) einem Isocyanat-Gemisch a2),
b) 2-[(2,4-dichlorphenyl)-methyl-4,4'-dimethyl]-3-isoxazolidinone, gelöst in einem organischen, wasserunlöslichem Lösemittel b1),
c) ein oder mehrere Zusatzstoffe und
B) eine flüssige, wässrige Phase,
wobei die Teilchen der dispersen Phase A) eine mittlere Partikelgröße zwischen 1 und 50 µm aufweisen.

2. Kapselsuspensionskonzentrate gemäß Anspruch 1, **dadurch gekennzeichnet, dass** diese mindestens ein Schutzkolloid c1) enthalten.

3. Verfahren zur Herstellung der Kapselsuspensionskonzentrate gemäß Anspruch 1, **dadurch gekennzeichnet, dass** in Schritt (1) 2-[(2,4-dichlorphenyl)-methyl]-4,4'-dimethyl-3-isoxazolidinone b), gelöst in einem organischen, wasserunlöslichem Lösemittel b1), mit dem Isocyanat-Gemisch a2) sowie gegebenenfalls mit einem organischen Lösungsmittel und/oder Emulgator vermischt wird, die so hergestellte Lösung dann in einem (2) zweiten Schritt in Wasser, enthaltend ein Schutzkolloid c1), gegebenenfalls im Gemisch mit weiteren Zusatzstoffen c), emulgiert wird und die so hergestellte Emulsion in einem (3) dritten Schritt mit a1) versetzt wird und danach gegebenenfalls noch Zusatzstoffe c) hinzugefügt werden.

4. ZC-Formulierungen enthaltend Kapselsuspensionskonzentrate gemäß Anspruch 1 und mindestens ein Suspensionskonzentrat (SC's) enthaltend
- ein oder mehrere Wirkstoffe a') und/oder ein oder mehrere Safener s),
- mindestens ein oder mehrere Verdicker c),
- ein oder mehrere anionische Emulgatoren e1) und
- ein oder mehrere nichtionische Emulgatoren e2).

5. ZC-Formulierungen gemäß Anspruch 4, **dadurch gekennzeichnet, dass** diese ein oder mehrere Safener s),
- mindestens ein oder mehrere Verdicker c),
- mindestens ein oder mehrere anionische Emulgatoren e1),
- mindestes ein oder mehrere nichtionische Emulgatoren e2) und
- mindestens ein oder mehrere Trägermaterialien f) enthalten.

6. ZC-Formulierungen gemäß Anspruch 4, **dadurch gekennzeichnet, dass** diese
ein oder mehrere Wirkstoffe a') und ein oder mehrere Safener s),
mindestens ein oder mehrere Verdicker c),
- mindestens ein oder mehrere anionische Emulgatoren e1),
- mindestes ein oder mehrere nichtionische Emulgatoren e2) und
- mindestens ein oder mehrere Trägermaterialien f) enthalten.

7. Verwendung der Kapselsuspensionskonzentrate gemäß Anspruch 1 als Herbizid im Getreide und Raps und hierbei im Vorauflauf sowie im Nachauflauf.

8. Verfahren zur Bekämpfung von unerwünschten Pflanzen in Pflanzenkulturen, **dadurch gekennzeichnet, dass** die Kapselsuspensionskonzentrate gemäß Anspruch 1 auf die Pflanzen, oder die Fläche, auf der die Pflanzen wachsen ausgebracht werden.

9. Verwendung der Kapselsuspensionskonzentrate gemäß Anspruch 1 zur Bekämpfung von Schadpflanzen in transgenen Kulturpflanzen.

10. Verwendung der Kapselsuspensionskonzentrate gemäß Anspruch 1 zur Behandlung von Pflanzen, bei denen das Saatgut mit Safener behandelt wurde.
